(19)

Europäisches
Patentamt
European
Patent Office
Office européen
des brevets

(11) **EP 4 446 927 A1**

(12) **EUROPEAN PATENT APPLICATION**

(43) Date of publication:
**16.10.2024 Bulletin 2024/42**

(21) Application number: **24170110.1**

(22) Date of filing: **12.04.2024**

(51) International Patent Classification (IPC):
***G06F 30/00*** (2020.01)

(52) Cooperative Patent Classification (CPC):
**G06F 30/17; G06F 30/20; G06F 30/23;**
G06F 2111/06; G06F 2111/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **13.04.2023 US 202363495998 P
06.07.2023 US 202318348303**

(71) Applicant: **Autodesk, Inc.
San Francisco, CA 94105 (US)**

(72) Inventors:
• **RODRIGUEZ, Jesus
San Francisco, 94105 (US)**

• **BURLA, Ravi Kumar
San Francisco, 94105 (US)**
• **EOM, Jaesung
San Francisco, 94105 (US)**
• **MESHKAT, Siavash Navadeh
San Francisco, 94105 (US)**
• **WEISS, Benjamin McKittrick
San Francisco, 94105 (US)**

(74) Representative: **Morrall, Jonathan Ian McLachlan
Kilburn & Strode LLP
Lacon London
84 Theobalds Road
London WC1X 8NL (GB)**

(54) **EFFICIENT MODELING OF ASSEMBLIES USING GENERATIVE DESIGN**

(57) One embodiment of the present invention sets forth a technique for modeling assemblies using generative design techniques. The technique includes determining a portion of an assembly to model as a superelement and computing a mathematical model representing the superelement. The technique further includes eliminating one or more interior degrees of freedom from the mathematical model and computing a reduced stiffness matrix corresponding to the superelement by solving one or more equations associated with the mathematical model using an iterative sparse matrix solver.

FIG. 5

EP 4 446 927 A1

**Description**

**CROSS-REFERENCE TO RELATED APPLICATIONS**

This application claims benefit of United States patent application serial number 63/495,998 filed April 13, 2023, which is hereby incorporated herein by reference.

**BACKGROUND**

**Field of the Various Embodiments**

Embodiments of the present disclosure relate generally to modeling of assemblies using computer-aided design techniques and, more specifically, to modeling of assemblies in the context of generative design.

**Description of the Related Art**

Industrial designers, including architects and automotive designers, often create 3D models of assemblies as part of the design process for products such as consumer electronics, furniture, appliances, and other manufactured goods. Modeling assemblies involves creating digital representations of multiple components or parts that fit and work together to form a functional whole. These models are typically created using computer-aided design (CAD) software and may include detailed geometry, component relationships, and assembly instructions. Industrial designers use assembly modeling to visualize and evaluate how different parts come together, ensuring proper fit, functionality, and manufacturability.

Generative design comprises a set of tools and methodologies that can be used in the modeling of assemblies to create optimized design solutions and enhance the capabilities of industrial designers. Generative design is an approach that involves using algorithms and computational methods to generate design solutions based on specified goals, constraints, and parameters. A designer or engineer using generative design tools typically provides a set of requirements in terms of loads, boundary conditions, materials, initial starting shape, manufacturing constraints and other parameters and the CAD tools create various shapes that satisfy the requirements. Generative design allows the users to choose from a set of design/shape options that are generated so that specific requirements of the users are met. The designs are created using 3D printing or other manufacturing processes like milling or casting.

Topology optimization is a specific technique within generative design that focuses on optimizing the material layout or distribution within a given design space to achieve desired performance objectives. It aims to determine the optimal shape or topology of a structure while considering factors such as material usage, weight reduction, structural strength, and other performance metrics. By applying topology optimization algorithms, generative design systems can automatically generate and explore various design options by iteratively modifying the material distribution, often resulting in shapes that are optimized for specific objectives. Thus, topology optimization plays a key role in the broader context of generative design by enabling the creation of optimized design solutions.

With respect to structural engineering, for example, topology optimization is the primary technique used to achieve generative design. Using the initially provided shape along with loads, boundary conditions, manufacturing constraints, etc., a topology optimization process updates the shape iteratively based on the feedback from structural simulation that is performed on the current shape. Topology optimization uses an iterative optimization process where an objective (e.g., minimizing weight or stress concentration) is reduced or minimized by adding/removing material based on given constraint conditions. The objective is typically related to compliance or a form of compliance (e.g., strain energy). Optimization constraints typically restrict the addition/removal of material and also restrict the regions inside the model where the material can be added or removed. There are several types of constraints that can be used in topology optimization including:

A) Volume fraction constraint: this constraint sets a limit on the amount of material that can be removed from the model. As the volume fraction constraint is reached, the optimizer rearranges the material in the model so that the objective can be minimized subject to the constraint.

B) Stress constraint: This constraint limits the amount of stress the model can undergo. The optimizer would add/remove/rearrange the material in the model to satisfy this constraint.

C) Thickness constraint: This constraint limits the thickness of the members/sections in the model. The sections in the model are prevented from going below specified a value.

D) Displacement constraint: This constraint limits the maximum amount of deformation the model can undergo

Topology optimization typically leverages Finite Element techniques (also known as Finite Element Analysis (FEA)) in order to perform the necessary shape adjustments at each iteration. The first step in FEA involves dividing the physical system into smaller, discrete subregions called finite elements. These elements are typically simple geometric shapes, such as triangles or quadrilaterals in 2D or tetrahedra or hexahedra in 3D. Next, mathematical equations governing the behavior of the system, such as partial differential equations (PDEs), are formulated. These equations describe the physical phenomena, such as mechanical stress, fluid flow, or heat transfer, within each finite element. Within each finite element, the unknown quantities (e.g., displacements, temperatures, pressures) are approximated using interpolation functions. These functions interpolate the values of the unknowns at specific points within the element based on the known values at its vertices or integration points. The system of equations is then assembled by combining the individual element equations into a global equation system. This process involves accounting for the connectivity between elements and enforcing appropriate continuity and compatibility conditions at shared nodes or interfaces. The resulting equation system can be solved using one or more methods (e.g., direct solvers). The goal is to determine the unknown quantities at each node or integration point within the system. Once the solution is obtained, post-processing is performed to extract useful information and visualize the results.

Current CAD tools employing generative design use topology optimization techniques for parts that can be part of a larger assembly, however, they generally ignore the "assembly context" (the entire assembly except for the part to be optimized) or approximate the assembly context. In other words, CAD tools using generative design can overlook or provide a simplified representation of the assembly context, potentially missing important considerations for the overall performance and functionality of the assembly. Not taking the assembly context into consideration or oversimplifying the effects of the assembly context during the optimization process for a component can result in inaccuracies and increased difficulty in modeling the boundary conditions to which the part is subject. This poses challenges for both component modelers and users of CAD tools, as it requires manual input of loads and constraints, thereby placing an increased burden on the modeler. Particularly, in the context of assemblies, determining the appropriate loads and constraints can be nontrivial, often necessitating multiple iterations of trial and error to achieve accuracy. Further, while the entire assembly context can be modeled using generative design, and, in particular, FEA techniques, modeling the entire assembly using FEA is computationally expensive and time intensive, thereby, making it impractical for usage in typical modeling environments.

As the foregoing illustrates, what is needed in the art are more effective techniques for considering and incorporating the interdependencies and interactions between a part and the assembly in which it in incorporated during the optimization process.

## SUMMARY

One embodiment of the present invention sets forth a technique for modeling assemblies using generative design techniques. The technique includes selecting a portion of the assembly to be encapsulated as a superelement for modeling. Typically, the portion of the assembly except for the component being designed (or optimized) is selected. The technique further includes computing a mathematical model for the portion of the assembly. The technique also includes determining interface surfaces comprising boundary nodes and reducing the boundary degrees of freedom from the model. Further, the technique includes eliminating interior degrees of freedom from the model. The technique then includes computing a reduced stiffness matrix representing the portion of the assembly being modeled by using an iterative sparse matrix solver to solve one or more equations associated with the model.

The disclosed techniques offer a technical advantage over the prior art by efficiently modeling an entire assembly (within which a component being modeled and optimized is contained) while mitigating excessive computational burden. The disclosed techniques effectively capture the assembly containing a component, ensuring accurate representation while minimizing the computational overhead associated with generalized systems that utilize generative design techniques for modeling the entire assembly. An additional technical advantage of the disclosed techniques is that it alleviates the burden on the modeler during the optimization process. The modeler is not required to manually define the effects of loads and constraints imposed on the component within the assembly, as the techniques automatically account for these factors during the optimization process. Moreover, after modeling the "assembly context" (the complete assembly excluding the part to be optimized), the substructure representing the assembly context can be encapsulated and represented as a unified entity. This encapsulation enables its reuse in subsequent modeling and optimization procedures, eliminating the need for additional time or computational resources. These technical advantages provide one or more technological improvements over prior art approaches.

## BRIEF DESCRIPTION OF THE DRAWINGS

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 illustrates a computing device 100 configured to implement one or more aspects of the various embodiments

Figure 2 illustrates an exemplar assembly comprising a component to be optimized using generative design processes.

Figure 3A illustrates an exemplary assembly, including a bracket, for which loads can be computed a prior for an original component design.

Figure 3B illustrates the exemplary assembly from Figure 3B where a portion of the bracket is removed during optimization.

Figure 4 illustrates the boundary node locations for the exemplar assembly of Figure 2, according to various embodiments.

Figure 5 includes a more detailed illustration of the topology optimization engine of Figure 1, according to various embodiments.

Figures 6A and 6B includes an illustration of the manner in which boundary degrees of freedom are reduced, according to various embodiments.

Figure 7 sets forth a flow diagram of method steps for modeling assemblies using generative design techniques, according to various embodiments.

## DETAILED DESCRIPTION

In the following description, numerous specific details are set forth to provide a more thorough understanding of the various embodiments. However, it will be apparent to one of skill in the art that the inventive concepts may be practiced without one or more of these specific details.

**System Overview**

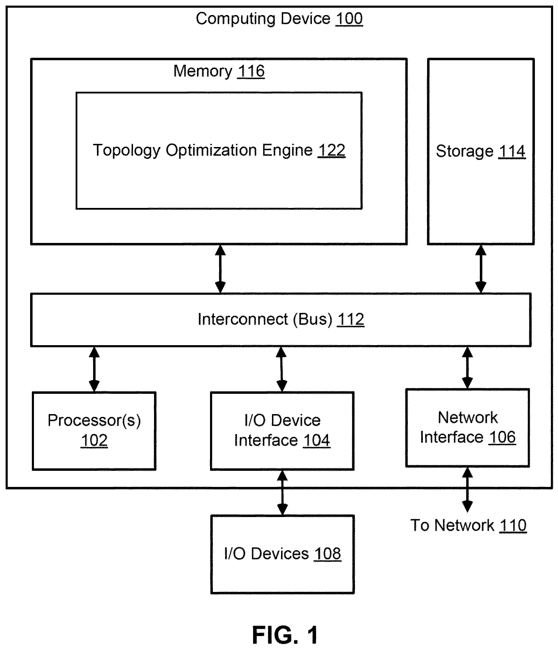

Figure 1 illustrates a computing device 100 configured to implement one or more aspects of the various embodiments. Computing device 100 may be a desktop computer, a laptop computer, a smart phone, a personal digital assistant (PDA), tablet computer, or any other type of computing device configured to receive input, process data, and optionally display images, and is suitable for practicing one or more embodiments of the present invention. Computing device 100 is configured to run a topology optimization engine 122 that reside in a memory 116.

It is noted that the computing device described herein is illustrative and that any other technically feasible configurations fall within the scope of the present invention. For example, multiple instances of topology optimization engine 122 could execute on a set of nodes in a distributed and/or cloud computing system to implement the functionality of computing device 100. In another example, topology optimization engine 122 could be implemented by various hardware and/or software components. In a third example, various hardware and/or software components of computing device 100 could be merged, rearranged, omitted, and/or replaced with other components with similar or different functionality.

In one embodiment, computing device 100 includes, without limitation, an interconnect (bus) 112 that connects one or more processors 102, an input/output (I/O) device interface 104 coupled to one or more input/output (I/O) devices 108, memory 116, a storage 114, and a network interface 106. Processor(s) 102 may be any suitable processor implemented as a central processing unit (CPU), a graphics processing unit (GPU), an application-specific integrated circuit (ASIC), a field programmable gate array (FPGA), an artificial intelligence (AI) accelerator, any other type of processing unit, or a combination of different processing units, such as a CPU configured to operate in conjunction with a GPU. In general, processor(s) 102 may be any technically feasible hardware unit capable of processing data and/or executing software applications. Further, in the context of this disclosure, the computing elements shown in computing device 100 may correspond to a physical computing system (e.g., a system in a data center) or may be a virtual computing instance executing within a computing cloud.

In one embodiment, I/O devices 108 include devices capable of receiving input, such as a keyboard, a mouse, a touchpad, and/or a microphone, as well as devices capable of providing output, such as a display device and/or speaker. Additionally, I/O devices 108 may include devices capable of both receiving input and providing output, such as a touchscreen, a universal serial bus (USB) port, and so forth. I/O devices 108 may be configured to receive various types of input from an end-user (e.g., a designer) of computing device 100, and to also provide various types of output to the end-user of computing device 100, such as displayed digital images or digital videos or text. In some embodiments, one or more of I/O devices 108 are configured to couple computing device 100 to a network 110.

In one embodiment, network 110 is any technically feasible type of communications network that allows data to be exchanged between computing device 100 and external entities or devices, such as a web server or another networked computing device. For example, network 110 could include a wide area network (WAN), a local area network (LAN), a wireless (WiFi) network, and/or the Internet, among others.

In one embodiment, storage 114 includes non-volatile storage for applications and data, and may include fixed or removable disk drives, flash memory devices, and CD-ROM, DVD-ROM, Blu-Ray, HD-DVD, or other magnetic, optical, or solid-state storage devices. Analysis engine 122, boundary segmentation engine 124, and room segmentation engine 126 may be stored in storage 114 and loaded into memory 116 when executed.

In one embodiment, memory 116 includes a random access memory (RAM) module, a flash memory unit, or any other type of memory unit or combination thereof. Processor(s) 102, I/O device interface 104, and network interface 106 are configured to read data from and write data to memory 116. Memory 116 includes various software programs that can be executed by processor(s) 102 and application data associated with said software programs, analysis engine 122, boundary segmentation engine 124, and room segmentation engine 126.

The topology optimization engine 122 focuses on optimizing the shape, material layout, distribution, etc., of, for example, a component (which may be part of a larger assembly) within a larger assembly to achieve desired performance objectives. The topology optimization engine 122 can leverage Finite Element Analysis (FEA) techniques in order to, for example, perform necessary shape adjustments of the component in design at each iteration. In one or more embodiments, the optimization engine 122 computes a stiffness matrix for the component, where the stiffness matrix represents a mathematical model that characterizes the structural behavior of the component. A stiffness matrix is a key element used in FEA to simulate and analyze the response of a design to applied loads and forces.

As mentioned earlier, the assembly containing the configured component experiences various loads and constraints, which are transmitted to the part through multiple load paths. A modeler of a component will typically need to take into account the various loads and constraints which the component is subjected to from the assembly within which it is configured. In certain embodiments, as will be further elaborated below, the topology optimization engine 122 employs a sparse matrix solver to compute a reduced stiffness matrix that characterizes the assembly within which the component is situated. Note that the reduced stiffness matrix is a mathematical model that characterizes the structural behavior of the portion of the assembly that excludes the component being optimized by the modeler. In other words, it is the assembly context that is characterized by the reduced stiffness matrix, while a separate stiffness matrix is computed for the component itself. Further reduction can be achieved by minimizing the number of boundary degrees of freedom, as will be discussed further below.

The reduced stiffness matrix can then be stored either within the optimization engine 122 or in a separate memory module (not shown in Figure 1) and reused in subsequent designs or optimizations involving the associated component. Computing a reduced stiffness matrix for the assembly context according to the disclosed techniques, as will be described in further detail below, allows the loads and constraints on the component to be effectively and accurately taken into account during an optimization process for the component without requiring significant human intervention or computational resources.

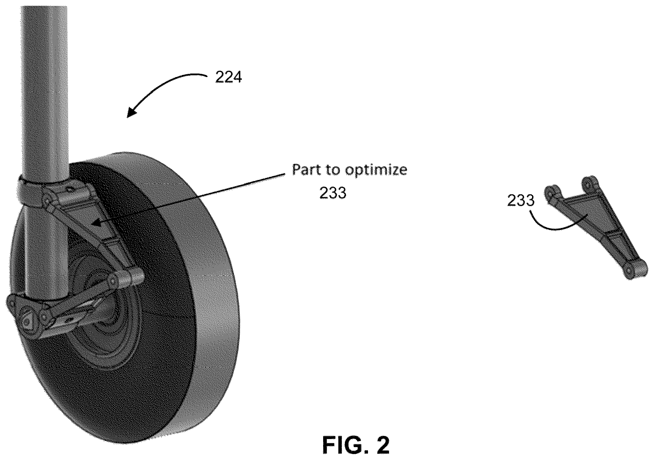

Figure 2 illustrates an exemplar assembly comprising a component to be optimized using generative design processes. Topology optimization involves an iterative process, where an initially provided shape, such as that of component 233, is continuously updated based on feedback from structural simulations performed on the current shape. As mentioned above, topology optimization typically leverages FEA techniques in order to, for example, perform necessary shape adjustments of the component 233 in design at each iteration. Generalized CAD tools using generative design techniques optimize components or parts (e.g., component 233) that could be part of a larger assembly 224, yet typically ignore the assembly context or approximate the assembly context in a way that results in inaccuracies. This also results in more difficulty for the modeler in modeling the boundary conditions to which the component is subjected.

Referring to the exemplary assembly shown in Figure 1, component 233, which is the part to be optimized is contained within the larger assembly 224. The assembly 224 comprises multiple parts and connections with the component 233. The assembly may be subject to several constraints and loads, where the loads may be transmitted to the component 233 via multiple load paths. In most cases, when using generalized CAD tools with generative design capabilities, modelers are often required to individually input a series of loads and constraints that simulate the conditions experienced by the part within assembly 224. This approach not only introduces inaccuracies but also imposes a significant burden on the modeler to accurately represent the component's surrounding environment.

In order to alleviate the need for manual intervention, certain generalized systems may utilize generative design techniques to model the entire assembly (instead of just a particular component within the larger assembly). While this approach achieves a high level of accuracy and reduces the modeling burden on the user, it entails increased computational costs due to the significant difference in volume between the component (e.g., component 233) and the assembly (e.g., assembly 224). Discretizing the entire assembly using finite element analysis (FEA) results in a substantial number of degrees of freedom that must be solved for at each optimization iteration, significantly amplifying the computational expense and runtime associated with the generative design process.

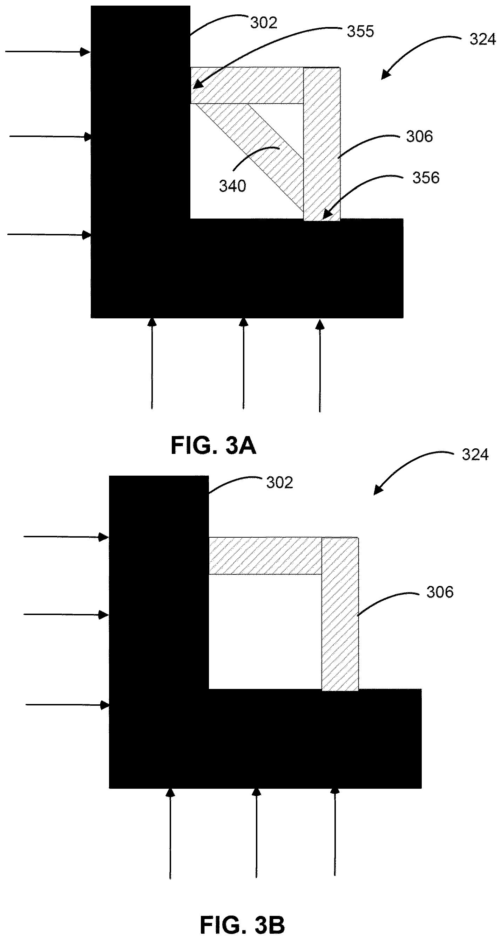

Other generalized systems use linear static analysis techniques to a priori compute the loads that are applied to the component (e.g., component 233) and use these computed loads during the optimization process. Figures 3A and 3B illustrate the deficiencies of computing loads a priori using linear static analysis techniques. Typically, a modeler would compute the loads on an original design for a component prior to any optimization (e.g., prior to any mass being added or removed from the component). Figure 3A illustrates an exemplary assembly, including a bracket, for which loads can be computed a prior for an original component design. For the bracket 306 in assembly 324, a modeler can use linear static analysis to compute the loads exerted at various points on the bracket 306 (e.g., interfaces or boundary nodes 355 or 356). The loads may be transmitted to the bracket 306 by the assembly context 302 or through various other load paths. Once computed, the loads transmitted by the assembly context 302 or various load paths would not change during the optimization process for the bracket 306. While the loads transmitted by the assembly context 302 or various other load paths may not change, the loads experienced at the boundary nodes or interfaces of the bracket 306 may change during the optimization process particularly if the shape of the bracket 306 undergoes changes.

Accordingly, computing the loads on the part to be optimized before any optimization is performed using linear static analysis exclusively can be problematic because the loads experienced at the boundary nodes or interfaces of the bracket 306 could change during the optimization process (e.g., if mass is removed from or added to the bracket 306) even though the loads on the assembly or exerted by the assembly remain the same. Figure 3B illustrates the exemplary assembly from Figure 3A where a portion of the bracket is removed during optimization. For example, if a portion 340 of the bracket 306 is removed during the optimization process, the loads at boundary nodes 356 and 355 would change even though the external loads on the assembly or applied through the assembly context 302 remain the same. Accordingly, computing the loads on the part to be optimized before any optimization is performed employing linear static analysis techniques exclusively can result in inaccuracies and lead to unsatisfactory results. One way to address these problems would be to optimize the entire assembly 324 as-is using the optimization process. However, as explained above, optimizing the entire assembly can be prohibitively expensive and unacceptably long runtimes especially in cases where the assembly is significantly larger than the component being modeled.

Some CAD tools utilize linear dynamic analysis (e.g., methods such as Craig-Bampton reduction) to model large-scale systems. However, systems utilizing dynamic analysis can be more complex and computationally more demanding than systems that utilize linear static analysis. Since linear static analysis does not consider the timedependent behavior of loads and responses, the computations involved are simpler and require fewer resources. Linear dynamic analysis involves solving differential equations over time, which can be more complex and time-consuming, especially for larger and more complex systems.

**EFFICIENT MODELING OF ASSEMBLIES USING GENERATIVE DESIGN**

In some embodiments, a reduction or condensation technique (e.g., Guyan reduction) in combination with linear static analysis is used in the context of generative design to model assemblies and, more specifically, to compute a reduced stiffness matrix (also referred to as a "superelement stiffness matrix" or an "interface matrix") for the assembly context of a component that is part of a larger assembly. Using Guyan reduction, for example, allows the assemblies to be modeled more efficiently. Because the cost of generating computer solutions for an analysis in the context of generative design is high, Guyan reduction can be employed to reduce the size of the problem by performing a reduction on the mass and stiffness matrices of the governing set of equations of motion.

In some embodiments, computing a reduced stiffness matrix associated with the assembly using a reduction technique (e.g., Guyan reduction) in the generative design context prevents loss of accuracy (where the loss of accuracy can occur through oversimplification or as a result of ignoring changes in loads experienced by a component in an assembly during the optimization process). Further, in some embodiments, the computational efficiency of Guyan reduction is further improved by using an iterative sparse matrix solver during the reduction phase and minimizing the boundary degrees of freedom.

The assembly surrounding the part to be optimized is reduced via Guyan reduction to obtain a "superelement," which is a consolidated (and, typically, simplified) representation or substructure of a larger assembly or system. In some embodiments, the superelement is created by eliminating the interior degrees of freedom and further by condensing or reducing the boundary degrees of freedom of the assembly, while preserving the key dynamic characteristics and interactions. This reduction in degrees of freedom helps in speeding up the analysis and optimization iterations during the generative design process.

Reducing the assembly context to a superelement also allows the assembly context to be represented as a single entity that can be saved and re-used for future optimizations or design evaluations. In other words, the superelement does not need to be re-computed for any further modeling or optimization operations. Representing the assembly context using a superelement captures the essential behavior of the assembly context or system without any significant loss in accuracy or without explicitly needing to include all of the geometric and material details of the assembly context. The superelement representing the assembly context allows for the efficient evaluation of multiple design alternatives by reducing the computational complexity associated with analyzing the entire assembly or system. Instead of analyzing the complete model, a superelement represents the portion of the assembly that interacts with the component (e.g., the component being optimized) through interface degrees of freedom. By using superelement, such as the one described herein, to represent the assembly context, generative design processes can efficiently evaluate the performance of different design variations, identify optimal solutions, and generate optimized designs within reasonable computational time frames.

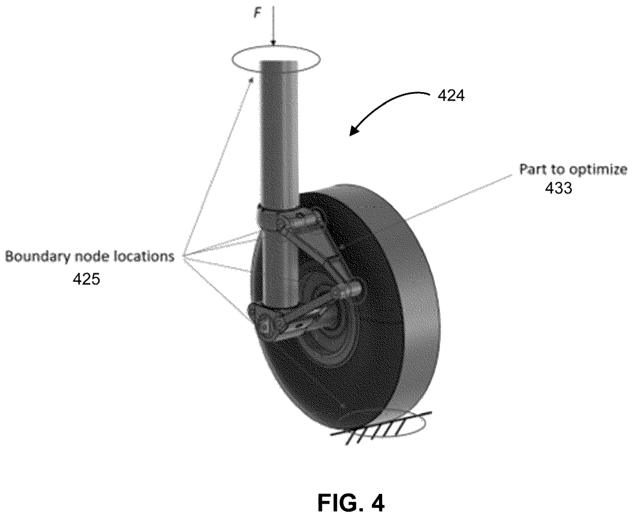

Figure 4 illustrates the boundary node locations for the exemplar assembly of Figure 2, according to various embodiments. As shown in Figure 4, component 433, which needs to be optimized, is attached to the rest of the assembly 424 via boundary nodes 425. In the context of generative design, boundary nodes refer to the nodes or points that define the boundary or interface between different components or regions within a design or assembly. These nodes represent the connection points where forces, displacements, or constraints are applied or transmitted between the components. Boundary nodes are used to define the interaction and connectivity between different parts or regions within a generative design process and play an important role in capturing the behavior and performance of the overall system. Boundary nodes can be defined based on the geometry, material properties, and connectivity of the components or regions within the generative design process. They provide a means to specify the input conditions and interactions required for simulating and optimizing the behavior of the system.

In the context of Figure 4, boundary nodes 425 can be used to specify the manner in which forces, displacements or other boundary conditions are transmitted from the overall assembly 424 or the environment to the component 433. The boundary nodes 425 play a significant role in defining the interface between the component 433 and the superelement representing the assembly context. The boundary nodes, as mentioned above, are used to establish the connection points where forces, displacements and constraints are transmitted between the superelement (representing the assembly context) and the component 433. In addition to the boundary nodes 425, other nodes that are part of the assembly 424 are considered interior nodes.

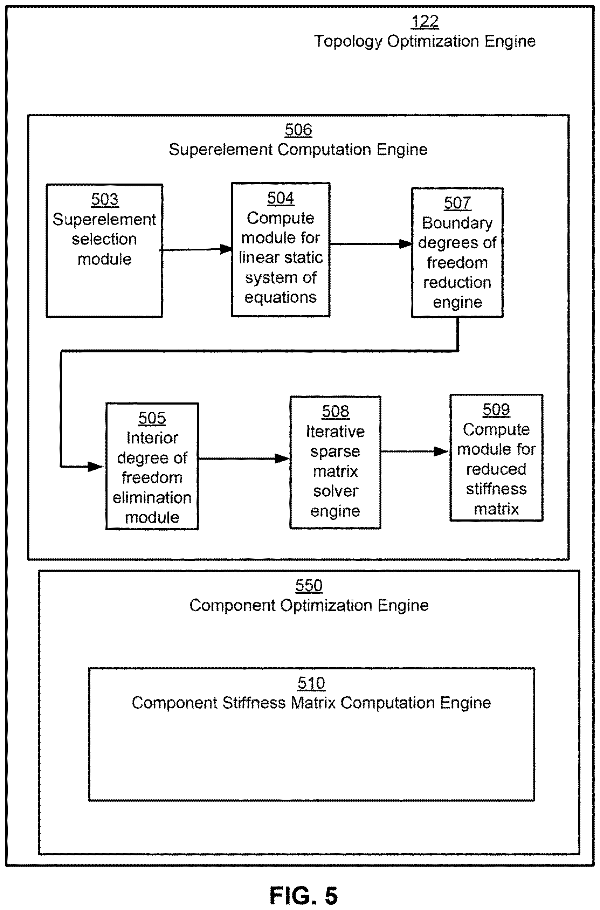

Figure 5 includes a more detailed illustration of the topology optimization engine of Figure 1, according to various embodiments. Topology optimization engine 122 comprises a component optimization engine 550 that performs optimization for a particular component (e.g., component 433 of Figure 4) that is part of a larger assembly. Component optimization engine 550 comprises a component stiffness matrix computation engine 510. A stiffness matrix, as used in systems that employ finite element analysis (FEA), represents the relationship between applied forces and resulting displacements within a structural system. The stiffness matrix captures the stiffness properties of the individual finite elements that comprise the design or assembly. Further, the stiffness matrix characterizes the resistance of the structure to deformation under external loads. The stiffness matrix is typically derived by considering the material properties, geometric configuration, and connectivity of the finite elements. In generative design, the stiffness matrix is used to evaluate the structural performance and behavior of different design alternatives, and plays a role in the simulation and optimization processes associated with a given component. By applying appropriate boundary conditions and loads to the CAD model (which will internally be transferred to the stiffness matrix), modelers can analyze the response of the system and assess its structural integrity, strength, and stability. By manipulating the stiffness matrix within the optimization process, modelers can also identify designs that meet specified criteria, such as minimizing weight while maintaining structural strength or maximizing stiffness within given constraints.

In addition to computing the stiffness matrix for the component, the topology optimization engine 122 also comprises a computation engine 506 for the superelement that represents the assembly context. In some embodiments, the superelement computation 506 computes a reduced stiffness matrix for the assembly context (e.g., the assembly 424 excluding the component 433). A reduced stiffness matrix refers to a condensed or simplified version of the original stiffness matrix of a system (e.g., the assembly context associated with a given component). The reduced stiffness matrix is obtained through techniques known as model reduction or condensation. In some embodiments, Guyan reduction is used to reduce the stiffness matrix of the assembly as will be discussed further below.

The reduced stiffness matrix is derived when a superelement associated with the portion of the assembly system that excludes the component is isolated for detailed analysis, while certain parts of the assembly or structure are approximated or simplified. The objective of condensing the stiffness matrix to a reduced stiffness matrix is to reduce the computational complexity and memory requirements associated with solving large-scale systems. The reduced stiffness matrix (computed by the compute module 509 comprised within the superelement computation engine 509) captures the interaction and influence between the superelement (e.g., representing the assembly context) and the rest of the structure (e.g., the component in the assembly being optimized). The entries of the reduced stiffness matrix depend on the connectivity and coupling between the superelement and the rest of the system.

In some embodiments, the reduced stiffness matrix in a generative design context is derived by first starting with a linear static system of equations associated with the assembly context. This linear static system of equations is, in some embodiments, reduced or condensed using a reduction scheme (e.g., Guyan reduction). Thereafter, the boundary degrees of freedom in the system are reduced by connecting the boundary nodes to a central node. Reducing the number of interfacing degrees of freedom results in a reduced set of equations for the analysis. Additionally, interior degrees of freedom can also be eliminated from the system of equations (e.g., using Guyan reduction or any other condensation or reduction method). Thereafter, an iterative sparse matrix solver can be used to iteratively solve the linear static system of equations associated with the assembly context in order to compute the reduced stiffness matrix. The reduced stiffness matrix 509 describes the influence of the assembly context superelement on the component (e.g., component 433 in Figure 4) and vice versa.

It should be noted that the reduced stiffness matrix for the assembly is typically computed once at the beginning of the simulation prior to the component being optimized using component optimization engine 550. Once the reduced stiffness matrix has been computed, the reduced stiffness matrix can be re-used in subsequent computations. As mentioned previously, the superelement associated with the assembly context can be re-used in various contexts without the need for further intervention from the modeler.

In some embodiments, the superelement computation engine 506 comprises a superelement selection module 503. The superelement selection module 503 allows a modeler to define or select the superelement, which, for example, can be the assembly context associated with a component in an assembly. The defined superelement can be a smaller substructure within a larger system that is identified for more detailed analysis. The superelement is typically chosen based on its significance or complexity in relation to the overall structure.

Having identified the superelement, in some embodiments, using FEA techniques, a linear static system of equations that represents (or is associated with) the assembly context is computed by a compute module 504. The linear static system of equations is determined by the compute module 504 under the directive that interior nodes associated with the assembly will typically be unloaded and unconstrained. The linear static system of equations can, therefore, be represented as the following:

$$\begin{bmatrix} K_{BB} & K_{BI} \\ K_{IB} & K_{II} \end{bmatrix} \begin{bmatrix} \underline{U_B} \\ \underline{U_I} \end{bmatrix} = \begin{bmatrix} \underline{F_B} \\ 0 \end{bmatrix} \qquad \text{(Equation 1)}$$

In Equation 1, $K$ denotes stiffness matrix terms, $\underline{U}$ is the nodal vector of displacements and $\underline{F}$ is the vector of nodal loads and the subscripts $B$ and $I$ refer to boundary and interior degrees of freedom, respectively. Note that in typical designs, elements associated with the of boundary degrees of freedom denoted by subscript $B$ will be significantly fewer than elements associated with the interior degrees of freedom denoted by subscript $I$.

Equation 1, which represents a matrix multiplication operation, can also be represented by Equations 2 and 3 as follows:

$$K_{BB}. \, \underline{U_B} + K_{BI}. \, \underline{U_I} = \underline{F_B} \qquad \text{(Equation 2)}$$

$$K_{IB}. \, \underline{U_B} + K_{II}. \, \underline{U_I} = 0 \qquad \text{(Equation 3)}$$

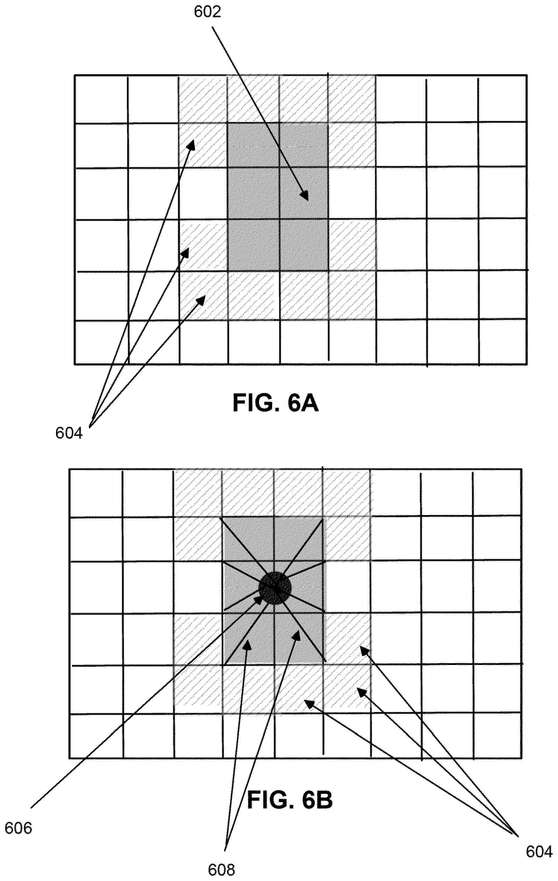

In some embodiments, a boundary degrees of freedom reduction engine 507 can optionally reduce the number of boundary degrees of freedom by connecting boundary nodes to a central node, as is further described in connection with Figure 6. In order to reduce the boundary degrees of freedom, the reduction engine 507 first has to determine the interface (or boundary) degrees of freedom that represent the connection points or boundaries between the superelement and the remaining structure. These interface degrees of freedom define the degrees of freedom that couple the superelement with the rest of the system. In some embodiments, the reduction engine 507 also determines which of the boundary interfaces comprise surfaces that can be reduced using the reduction scheme explained in Figures 6A and 6B.

Figures 6A and 6B includes an illustration of the manner in which boundary degrees of freedom are reduced, according to various embodiments. An exemplar boundary or interface surface 602 shown in Figure 6A comprises 12 boundary nodes 604. Each of the three boundary nodes can comprise 3 degrees of freedom (e.g., 3 degrees of translational freedom). The total number of boundary degrees of freedom associated with the surface 602 is, therefore, 36 (12 x 3).

As mentioned above, the computational efficiency of the superelement computation engine 506 can be improved minimizing the boundary degrees of freedom. In some embodiments, the boundary degrees of freedom can be reduced by connecting the boundary nodes 604 with stiff springs 608 to a central node 606 as shown in Figure 6B. In some embodiments, the central node 606 is located in the centroid of the surface 602 as shown in Figure 6B. The central node 606 comprises 6 degrees of freedom (compared with the 3 degrees of freedom associated with boundary nodes), including 3 translational degrees of freedom and 3 rotational degrees of freedom. The boundary surface 602 is thereafter associated with 6 degrees of freedom (as compared to 36). While using the central node adds additional degrees of freedom (e.g., 3 rotational degrees of freedom), using the central node condenses down the total degrees of freedom associated with the boundary nodes 604, resulting in a significant net reduction of degrees of freedom.

As shown in the example of Figure 6B, the entire surface 602 can be represented in the reduced stiffness matrix using a single central node instead of the 12 boundary nodes. This results in a considerable reduction in computational requirements. Referring to Equations 2 and 3, minimizing the boundary degrees of freedom in this fashion modifies the set of equations resulting from the matrix operations by reducing the dimensions associated with the terms $U_B$ and $F_B$. It should be noted, however, that while the set of equations associated with the matrix operations of Equation 1 are modified, the equations will typically have the same form, but the dimensions associated with the terms $U_B$ and $F_B$ will be smaller. By removing the rows and columns associated with the interface degrees of freedom, the stiffness matrix for the assembly context is reduced to a smaller size that corresponds to the superelement without any significant loss in accuracy. This condensation process eliminates the need to solve for the displacements and forces associated with the boundary degrees of freedom associated with each boundary node explicitly.

In some embodiments, a reduction process (e.g., Guyan reduction or any other condensation or reduction method) can be employed by module 505 of the computation engine 506 to eliminate the interior degrees of freedom from the system of equations (e.g., Equations 2 and 3 above) representing the assembly. Typically, the boundary degrees of freedom define the degrees of freedom that couple the superelement to the component that is being optimized by the generative design process. The interface or boundary degrees of freedom represent the connection points between the component and the assembly context and are critical for transferring forces and displacements between the component and the rest of the assembly. The computation engine 506 simplifies the system of equations representing the assembly context (e.g., Equations 2 and 3 above) by eliminating the interior degrees of freedom.

For example, solving for $U_I$, which relates to the interior degrees of freedom, using Equation 3 results in the following:

$$\underline{U}_I = -K_{II}^{-1} * K_{IB} \cdot \underline{U}_B \qquad \text{(Equation 4)}$$

Substituting the $U_I$ term in Equation 2 using Equation 4 results in the following equation:

$$\left(K_{BB} - K_{BI} K_{II}^{-1} K_{IB}\right)\underline{U}_B = \underline{F}_B \qquad \text{(Equation 5)}$$

Equation 5 represents the assembly context without including an explicit term that represents the interior degrees of freedom. Accordingly, effectively, the interior degrees of freedom no longer need to be considered in performing the topology optimization for the component, thereby, making the system more efficient.

Rewriting Equation 5 in compact forms results in the following:

$$K'\underline{U}_B = \underline{F}_B \qquad \text{(Equation 6)}$$

Note that $K'$ is the reduced stiffness matrix associated the assembly context. The matrix $K'$ is of size $N_B \times N_B$ where $N_B$ is the number of boundary (or interface) degrees of freedom. The size of matrix $K'$ is significantly smaller than the original matrix as a result of the computation engine 506 eliminating the interior degrees of freedom. Typically, the number of interior degrees of freedom is often substantially larger than $N_B$ thus eliminating these interior degrees of freedom leads to notable improvements in computational efficiency. It should also be noted that the reduced stiffness matrix captures the precise structural characteristics of the assembly in reduced form without sacrificing accuracy.

Computing the reduced stiffness matrix for certain assemblies that are large and structurally complex may be particularly expensive. More specifically, the computation of the term $K_{II}^{-1}K_{IB}$ in Equation 5 above can be expensive and impractical if a direct matrix solver or direct matrix factorization method is being employed. Note that the term $K_{II}^{-1}$ represents an inverse of a matrix associated with the interior nodes in the assembly, which can be considerably large in size for a complex assembly.

In some embodiments, an iterative sparse matrix solver engine 508 can be employed to compute the reduced stiffness matrix. In particular, an auxiliary matrix $X$ is utilized to solve for $K_{II}^{-1}$. For example, the term $K_{II}^{-1}K_{IB}$ in Equation 5 can be represented using the auxiliary matrix as follows:

$$K_{II}X = K_{IB} \qquad \text{(Equation 7)}$$

In some embodiments, the system of Equation 7 is cast as a system of linear equations that can be solved with an iterative sparse matrix solver executed by the solver engine 508. The solver engine 508 solves for each column $i$ of $X$ denoted by $\underline{x}^i$, by solving

$$K_{II}\underline{x}^i = \underline{k}_{IB}^i, \text{ where } \underline{k}_{IB}^i \text{ is the i-th column of } K_{IB} \qquad \text{(Equation 8)}$$

Iterative solvers can have significant advantages as compared to direct solvers. Iterative solvers are often more efficient for large and sparse matrices compared to direct solvers. In complex systems, the associated matrices can be large and exhibit sparsity. Iterative solvers exploit this sparsity and require fewer computations, leading to faster computation times. Iterative solvers also typically require less memory compared to direct solvers. For example, inverse matrices of complex systems (e.g., $K_{II}^{-1}$ in Equation 5) can be computationally expensive to store, and iterative solvers avoid the need to explicitly form the inverse matrix. Instead, they operate iteratively, generating solutions without requiring the explicit inverse.

Iterative solvers also provide control over the convergence behavior. Complex systems often involve intricate relationships and numerical challenges. Iterative solvers allow convergence criteria to be set, such as tolerances, to determine the desired level of accuracy. This flexibility allows a modeler to balance computational efficiency with desired accuracy. Iterative solvers can also be easily parallelized, making them suitable for high-performance computing environments. Complex systems often require substantial computational resources, and iterative solvers can take advantage of parallel processing to distribute the workload and accelerate the solution process. Iterative solvers also offer flexibility in handling different system configurations. They can be adapted to address specific characteristics of the problem, such as symmetry, sparsity patterns, or preconditioning techniques. This adaptability allows for efficient solution strategies tailored to the specific complexity of the system.

In some embodiments, the superelement computation engine 506 comprises a reduced stiffness matrix compute module 509. In order to compute the reduced stiffness matrix of the assembly, the compute module 509 needs to solve $N_B$ linear systems of equations each of size $N_I$, where $N_B$ represents the number of boundary degrees of freedom and $N_I$ represents the number of interior degrees of freedom. Solving the systems of equations to determine the reduced stiffness matrix is made more efficient by reducing $N_B$ as described in connection with the boundary degrees of freedom reduction engine 507.

In some embodiments, the superelement computation engine assembles the reduced stiffness matrix -which represents the assembly except the part to be optimized- in conjunction with the stiffness matrix of the component, where the stiffness matrix of the component is computed by the component stiffness matrix computation engine 510. Similarly, boundary conditions on the component and assembly are also assembled globally, and the optimization process for the component can proceed, without any modifications to the optimization itself.

It is to be understood that the functionality of certain modules or engines incorporated within computation engine 506 may be merged or encompass overlapping features. Moreover, certain modules, such as the optional boundary degrees of freedom reduction engine 507, provide flexibility, allowing the reduced stiffness matrix to be computed with a reduced number of components compared to the depiction shown in Figure 5.

In some embodiments, the superelement computation engine 506 can comprise additional computational modules in order to make the computation of the superelement more efficient. For example, depending on the overall assembly, other simplifications to the assembly can also be made. For example, if the parts of the assembly are nearly rigid in comparison to the part to be optimized, such components can be simplified as rigid bodies, which will reduce the cost of generating the reduced stiffness matrix. Accordingly, an additional computational module can be included in the superelement computation engine that performs the computations necessary to reconfigure and characterize such components as rigid bodies.

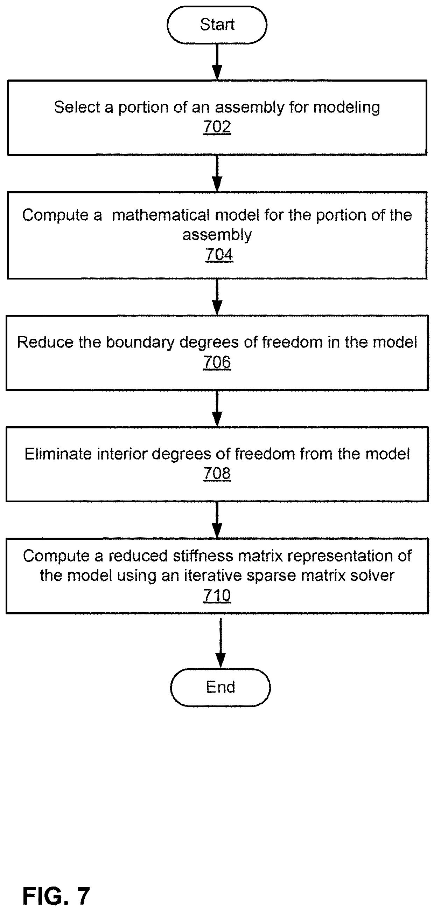

Figure 7 sets forth a flow diagram of method steps for modeling assemblies using generative design techniques, according to various embodiments. Although the method steps are described with reference to the system of Figures 1, 4 and 5, persons skilled in the art will understand that any system may be configured to implement the method steps, in any order, in other embodiments.

At step 702, a portion of an assembly is selected for modeling. As discussed in connection with Figure 5, a superelement selection module 503 of a superelement computation engine 506 determines the portion of the assembly (e.a., the assembly context) to be modeled. In some embodiments, the portion of the assembly except for the component being designed (or optimized) is selected.

At step 704, the superelement computation engine 506 computes a mathematical model for the selected superelement. In some embodiments, the model comprises a linear static system of equations that needs to be computed in order to model the behavior of the assembly context.

At step 706, the number of boundary degrees of freedom is reduced. As discussed above, the superelement computation engine 506 determines one or more interface surfaces comprising boundary nodes. The boundary degrees of freedom associated with the interface surfaces can be reduced by connecting the boundary nodes to a central node (typically located in the centroid of the surface) using stiff springs.

At step 708, interior degrees of freedom are eliminated from the model. In some embodiments, Guyan reduction or any other condensation or reduction method can be used to reduce the interior degrees of freedom.

At step 710, an iterative sparse matrix solver is used to compute a reduced stiffness matrix that represents the model.

In sum, the disclosed techniques model assemblies using generative design techniques. A computation engine selects a portion of the assembly to be encapsulated as a superelement for modeling. Typically, the portion of the assembly except for the component being designed (or optimized) is selected. A mathematical model for the portion of the assembly is then computed by the engine. The engine then determines interface surfaces comprising boundary nodes and reduces the boundary degrees of freedom from the model. Further, the engine eliminates interior degrees of freedom from the model. A reduced stiffness matrix is then computed representing the portion of the assembly being modeled by using an iterative sparse matrix solver to solve one or more equations comprised in the model.

One technical advantage of the disclosed techniques relative to the prior art is that the disclosed techniques allow for efficient modeling of an entire assembly (within which a component being modeled and optimized is contained) while mitigating excessive computational burden. The disclosed techniques effectively capture and represent the assembly containing a component, ensuring accurate representation while minimizing the computational overhead associated with generalized systems that utilize generative design techniques for modeling the entire assembly. An additional technical advantage of the disclosed techniques is that it alleviates the burden on the modeler during the optimization process. The modeler is not required to manually define the effects of loads and constraints imposed on the component within the assembly, as the techniques automatically account for these factors during the optimization process. Moreover, after modeling the "assembly context" (the complete assembly excluding the part to be optimized), the substructure representing the assembly context can be encapsulated and represented as a unified entity. This encapsulation enables its reuse in subsequent modeling and optimization procedures, eliminating the need for additional time or computational resources. These technical advantages provide one or more technological improvements over prior art approaches.

1. According to some embodiments a computer-implemented method for modeling assemblies using generative design techniques comprises determining a portion of an assembly to model as a superelement, wherein the superelement comprises a consolidated representation of the portion of the assembly; computing a mathematical model representing the superelement; eliminating one or more interior degrees of freedom from the mathematical model; computing a reduced stiffness matrix corresponding to the superelement by solving one or more equations associated with the mathematical model using an iterative sparse matrix solver; and performing an optimization associated with a component that interacts with the portion of the assembly, wherein the reduced stiffness matrix is used to represent the superelement.

2. The computer-implemented method of clause 1, further comprising reducing one or more boundary degrees of freedom from the mathematical model.

3. The computer-implemented method according to clauses 1-2, wherein reducing one or more boundary degrees of freedom comprises: determining at least one boundary surface comprising one or more boundary nodes associated with the superelement; and reducing the one or more boundary nodes by substituting the one or more boundary nodes with a central node.

4. The computer-implemented method according to clauses 1-3, wherein the central node is connected to the one or more boundary nodes using stiff springs.

5. The computer-implemented method according to clauses 1-4, wherein the component is part of the assembly and the portion of the assembly associated with the superelement excludes the component, and wherein the optimization uses topology optimization techniques.

6. The computer-implemented method according to clauses 1-5, further comprising storing the reduced stiffness matrix associated with the superelement for subsequent reuse during topology optimization processes associated with the assembly.

7. The computer-implemented method according to clauses 1-6, further comprising: computing a stiffness matrix for the component; and performing the optimization of the component using the stiffness matrix for the component and the reduced stiffness matrix associated the superelement.

8. The computer-implemented method according to clauses 1-7, wherein eliminating the one or more interior degrees of freedom uses a Guyan reduction process.

9. The computer-implemented method according to clauses 1-8, further comprising: determining if the portion of the assembly corresponding to the superelement are substantially rigid relative to a component of the assembly being optimized; responsive to a determination that the portion of the assembly is substantially rigid relative to the component, computing the reduced stiffness matrix by approximating the portion of the assembly corresponding to the superelement as a rigid body.

10. The computer-implemented method according to clauses 1-9, wherein the mathematical model is computed using linear static analysis.

11. According to some embodiments, one or more non-transitory computer readable media storing instructions that, when executed by one or more processors, cause the one or more processors to perform the steps of: determining a portion of an assembly to model as a superelement, wherein the superelement comprises a consolidated representation of the portion of the assembly; computing a mathematical model representing the superelement; eliminating one or more interior degrees of freedom from the mathematical model; computing a reduced stiffness matrix corresponding to the superelement by solving one or more equations associated with the mathematical model using an iterative sparse matrix solver; and performing an optimization associated with a component that interacts with the portion of the assembly, wherein the reduced stiffness matrix is used to represent the superelement .

12. The one or more non-transitory computer readable media according to clause 11, wherein the instructions further cause the one or more processors to perform the steps of: reducing one or more boundary degrees of freedom from the mathematical model.

13. The one or more non-transitory computer readable media according to clause 11-12, wherein reducing one or more boundary degrees of freedom comprises: determining at least one boundary surface comprising one or more boundary nodes associated with the superelement; and reducing the one or more boundary nodes by substituting the one or more boundary nodes with a central node.

14. The one or more non-transitory computer readable media according to clause 11-13, wherein the central node is connected to the one or more boundary nodes using stiff springs.

15. The one or more non-transitory computer readable media according to clause 11-14, wherein the component is part of the assembly and the portion of the assembly associated with the superelement excludes the component, and wherein the optimization uses topology optimization techniques .

16. The one or more non-transitory computer readable media according to clause 11-15, wherein the instructions further cause the one or more processors to perform the steps of: storing the reduced stiffness matrix associated with the superelement for subsequent reuse during topology optimization processes associated with the assembly.

17. The one or more non-transitory computer readable media according to clauses 11-16, wherein the instructions further cause the one or more processors to perform the steps of: computing a stiffness matrix for the component;

and performing the optimization of the component using the stiffness matrix for the component and the reduced stiffness matrix associated the superelement.

18. The one or more non-transitory computer readable media according to clauses 11-17, wherein eliminating the one or more interior degrees of freedom uses a Guyan reduction process.

19. According to some embodiments, a system comprises: one or more memories that store instructions, and one or more processors that are coupled to the one or more memories and, when executing the instructions, are configured to: determine a portion of an assembly to model as a superelement, wherein the superelement comprises a consolidated representation of the portion of the assembly; compute a mathematical model representing the superelement; eliminate one or more interior degrees of freedom from the mathematical model; compute a reduced stiffness matrix corresponding to the superelement by solving one or more equations associated with the mathematical model using an iterative sparse matrix solver; and perform an optimization associated with a component that interacts with the portion of the assembly, wherein the reduced stiffness matrix is used to represent the superelement.

20. The system according to clause 19, wherein the one or more interior degrees of freedom are eliminated using a Guyan reduction process.

Any and all combinations of any of the claim elements recited in any of the claims and/or any elements described in this application, in any fashion, fall within the contemplated scope of the present invention and protection.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module," a "system," or a "computer." In addition, any hardware and/or software technique, process, function, component, engine, module, or system described in the present disclosure may be implemented as a circuit or set of circuits. Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block

**EP 4 446 927 A1**

diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

1. A computer-implemented method for modeling assemblies using generative design techniques, the method comprising:

   determining a portion of an assembly to model as a superelement, wherein the superelement comprises a consolidated representation of the portion of the assembly;
   computing a mathematical model representing the superelement;
   eliminating one or more interior degrees of freedom from the mathematical model;
   computing a reduced stiffness matrix corresponding to the superelement by solving one or more equations associated with the mathematical model using an iterative sparse matrix solver; and
   performing an optimization associated with a component that interacts with the portion of the assembly, wherein the reduced stiffness matrix is used to represent the superelement.

2. The computer-implemented method of claim 1, further comprising reducing one or more boundary degrees of freedom from the mathematical model.

3. The computer-implemented method of claim 2, wherein reducing one or more boundary degrees of freedom comprises:

   determining at least one boundary surface comprising one or more boundary nodes associated with the superelement; and
   reducing the one or more boundary nodes by substituting the one or more boundary nodes with a central node.

4. The computer-implemented method of claim 3, wherein the central node is connected to the one or more boundary nodes using stiff springs.

5. The computer-implemented method of any preceding claim, wherein the component is part of the assembly and the portion of the assembly associated with the superelement excludes the component, and wherein the optimization uses topology optimization techniques.

6. The computer-implemented method of any preceding claim, further comprising:
   storing the reduced stiffness matrix associated with the superelement for subsequent reuse during topology optimization processes associated with the assembly.

7. The computer-implemented method of any preceding claim, further comprising:

   computing a stiffness matrix for the component; and
   performing the optimization of the component using the stiffness matrix for the component and the reduced stiffness matrix associated the superelement.

8. The computer-implemented method of any preceding claim, wherein eliminating the one or more interior degrees of freedom uses a Guyan reduction process.

9. The computer-implemented method of any preceding claim, further comprising:

   determining if the portion of the assembly corresponding to the superelement are substantially rigid relative to a component of the assembly being optimized;
   responsive to a determination that the portion of the assembly is substantially rigid relative to the component, computing the reduced stiffness matrix by approximating the portion of the assembly corresponding to the superelement as a rigid body.

14

**10.** The computer-implemented method of any preceding claim, wherein the mathematical model is computed using linear static analysis.

**11.** A computer program product storing instructions that, when executed by one or more processors, cause the one or more processors to perform the method of any preceding claim.

**12.** A system, comprising:

> one or more memories that store instructions, and
> one or more processors that are coupled to the one or more memories and,
> when executing the instructions, are configured to perform the method of any of claims 1 to 11.

Computing Device 100

Memory 116

Topology Optimization Engine 122

Storage 114

Interconnect (Bus) 112

Processor(s) 102

I/O Device Interface 104

Network Interface 106

I/O Devices 108

To Network 110

**FIG. 1**

**FIG. 2**

**FIG. 3A**

**FIG. 3B**

Part to optimize
433

424

*f*

Boundary node locations
425

FIG. 4

**122**
Topology Optimization Engine

**506**
Superelement Computation Engine

**503**
Superelement selection module

**504**
Compute module for linear static system of equations

**507**
Boundary degrees of freedom reduction engine

**505**
Interior degree of freedom elimination module

**508**
Iterative sparse matrix solver engine

**509**
Compute module for reduced stiffness matrix

**550**
Component Optimization Engine

**510**
Component Stiffness Matrix Computation Engine

**FIG. 5**

FIG. 6A

FIG. 6B

```
┌──────────────┐
│    Start     │
└──────────────┘
        │
        ▼
┌─────────────────────────────────────────────┐
│   Select a portion of an assembly for        │
│              modeling                         │
│                 702                           │
└─────────────────────────────────────────────┘
        │
        ▼
┌─────────────────────────────────────────────┐
│  Compute a  mathematical model for the        │
│       portion of the assembly                 │
│                 704                           │
└─────────────────────────────────────────────┘
        │
        ▼
┌─────────────────────────────────────────────┐
│  Reduce the boundary degrees of freedom in    │
│              the model                        │
│                 706                           │
└─────────────────────────────────────────────┘
        │
        ▼
┌─────────────────────────────────────────────┐
│  Eliminate interior degrees of freedom from   │
│              the model                        │
│                 708                           │
└─────────────────────────────────────────────┘
        │
        ▼
┌─────────────────────────────────────────────┐
│  Compute a reduced stiffness matrix           │
│  representation of the model using an         │
│     iterative sparse matrix solver            │
│                 710                           │
└─────────────────────────────────────────────┘
        │
        ▼
┌──────────────┐
│     End      │
└──────────────┘
```

**FIG. 7**

# EUROPEAN SEARCH REPORT

**Application Number**

EP 24 17 0110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LI ANG ET AL: "Lightweight design of a crane frame under stress and stiffness constraints using super-element technique", ADVANCES IN MECHANICAL ENGINEERING, 10 August 2017 (2017-08-10), XP093184656, ISSN: 1687-8140, DOI: 10.1177/1687814017716621 Retrieved from the Internet: URL:https://journals.sagepub.com/doi/pdf/10.1177/1687814017716621 [retrieved on 2024-07-11] | 1,2,5-12 | INV. G06F30/00 |
| Y | * the whole document * | 3,4 | |
| Y | Stigliano G ET AL: "Advanced Vehicle Body Concept Modeling Approach Using Reduced Models of Beams and Joints", , 22 September 2010 (2010-09-22), XP093185224, Retrieved from the Internet: URL:https://www.researchgate.net/publication/228422216_Advanced_Vehicle_Body_Concept_Modeling_Approach_Using_Reduced_Models_of_Beams_and_Joints [retrieved on 2024-07-11] | 3,4 | |
| A | * the whole document * | 1,2,5-12 | |

TECHNICAL FIELDS SEARCHED (IPC)

G06F

-/--

The present search report has been drawn up for all claims

| Place of search | Date of completion of the search | Examiner |
|---|---|---|
| Munich | 15 July 2024 | Lindner, Anja |

Europäisches
Patentamt

European
Patent Office

Office européen
des brevets

**EUROPEAN SEARCH REPORT**

Application Number

EP 24 17 0110

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Altair Engineering Inc.: "Altair OptiStruct 2021 User Guide: Direct Matrix Input (Superelements)", , 8 January 2021 (2021-01-08), pages 1-1090, XP093185052, Retrieved from the Internet: URL:https://2021.help.altair.com/2021/simulation/pdfs/os/AltairOptiStruct_2021_UserGuide.pdf [retrieved on 2024-07-11] * page 616 - page 635 * | 1-12 | |
| A | GAO JINGJING ET AL: "Application of the super element model with topology optimization method and genetic algorithm in the design of a large submillimeter telescope", JOURNAL OF ASTRONOMICAL TELESCOPES, INSTRUMENTS, AND SYSTEMS, SOCIETY OF PHOTO-OPTICAL INSTRUMENTATION ENGINEERS, 1000 20TH ST. BELLINGHAM WA 98225-6705 USA, vol. 8, no. 2, 1 April 2022 (2022-04-01), page 28001, XP060159797, ISSN: 2329-4124, DOI: 10.1117/1.JATIS.8.2.028001 [retrieved on 2022-04-18] * the whole document * | 1-12 | TECHNICAL FIELDS SEARCHED (IPC) |

The present search report has been drawn up for all claims

| Place of search | Date of completion of the search | Examiner |
|---|---|---|
| Munich | 15 July 2024 | Lindner, Anja |

EPO FORM 1503 03.82 (P04C01)

**EP 4 446 927 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63495998